# EUROPÄISCHE PATENTANMELDUNG

(11) **EP 1 715 706 A1**
(43) Veröffentlichungstag der Anmeldung: **25.10.2006**
(21) Anmeldenummer: 06112644.7
(22) Anmeldetag: 13.04.2006
(51) Int. Cl.: H04Q 7/36, H04B 7/26

(54) **Erweiterung der Ausdehnung einer Funknetzzelle durch digitale Funksignalverstärker**

(30) Priorität: 20.04.2005 DE 102005018506
(71) Anmelder: Vodafone Holding GmbH, 40213 Düsseldorf (DE)
(72) Erfinder: Pötschke, Matthias, 02708, Löbau OT Kittlitz (DE); Vogel, Mike, 42103, Wupptertal (DE); Hoffmann, Frank, 52134, Herzogenrath (DE); Glatzel, Andreas, 41468, Neuss (DE)
(74) Vertreter: Weisse, Renate

(57) **Zusammenfassung**

Die Erfindung betrifft eine Funknetzzelle (12b) für ein Mobilfunknetz (10), die mithilfe von digitalen Funksignalverstärkern (24, 26, 28) eine beliebige Ausdehnung erhalten kann. Ferner betrifft die Erfindung ein Mobilfunknetz (10), welches wenigstens eine Funknetzzelle (12b) enthält, die mithilfe von digitalen Funksignalverstärkern (24, 26, 28) auf eine beliebige Größe ausgedehnt werden kann.

## Beschreibung

### Technisches Gebiet

Die Erfindung betrifft eine Funknetzzelle eines digitalen, zellularen Mobilfunknetzes, insbesondere nach dem GSM oder UMTS-Standard, welche durch eine stationäre Basisstation (BTS) versorgt wird, wobei die Größe der Funknetzzelle durch die Reichweite des geographischen Versorgungsbereiches der Basisstation (BTS) bestimmt wird. Ferner betrifft die Erfindung ein Mobilfunknetz, dessen Ausdehnung durch die Anordnung von Funknetzzellen zum Roaming für Mobilfunkendgeräte festgelegt wird, wobei eine Funknetzzelle durch die Reichweite des geographischen Versorgungsbereichs einer Basisstation bestimmt wird.

### Stand der Technik

Mobilfunknetze, insbesondere nach dem GSM oder UMTS-Standard, bestehen u.a. aus zahlreichen Funknetzzellen. Jede Funknetzzelle wird üblicherweise durch eine stationäre Basisstation (BTS) gebildet. Die Basisstation weist wenigstens einen Funkmast auf, über den Mobilfunkendgeräte über Funk kommunizieren können. Die Größe einer Funknetzzelle wird durch die Reichweite des geographischen Versorgungsbereiches der jeweiligen Basisstation (BTS) bestimmt. Die Koordination der Basisstationen erfolgt wiederum über Basisstation-Controller (BSC), die mit einer Vermittlungsstelle (MSC) verbunden sind.

Ein Mobilfunkendgerät wird beim Durchqueren der Funknetzzellen eines Mobilfunknetzes von einer Basisstation zur nächsten "weitergereicht". Diesen Vorgang nennt man Roaming. Die Basisstationen beziehungsweise die Funknetzzellen werden so angeordnet, dass bestimmte Flächen, wie eine Stadt und/oder deren Umgebung, ausreichend abgedeckt und versorgt sind. Es besteht auch Bedarf, Verkehrswege, wie Straßen, insbesondere Autobahnen, und Eisenbahnlinien mit ausreichendem Funknetz zu versorgen.

Es hat sich gezeigt, dass das Aufstellen von Basisstationen relativ aufwändig und kostenintensiv ist. Die Basisstationen kalkulieren sich daher für einen Mobilfunknetzbetreiber nur dann, wenn sie ausreichend ausgelastet sind. Bei Eisenbahnlinien wird das Mobilfunknetz nur von Mobilfunkteilnehmern genutzt, die in einem Zug sitzen. Je nach Zugfrequenz ist die Auslastung üblicherweise gering. Auch bei wenig befahrenen Straßen ist die Auslastung der aufgestellten Basisstationen entsprechend relativ gering. Hinzu kommt noch, dass die geographischen Gegebenheiten es erfordern, sehr viele Basisstationen für eine ausreichende Abdeckung aufzustellen.

Für das Roaming zwischen den Funknetzzellen müssen trotz der geringen Auslastung ausreichende Rechnerkapazitäten zur Verfügung gestellt werden. Wegen der hohen Kosten überlegen sich daher die Mobilfunkbetreiber, bestimmte Verkehrswege einfach von der Versorgung mit einem Mobilfunknetz auszusparen.

Die europäische Patentschrift EP 0 757 879 B1 beschreibt ein Telekommunikationssystem mit einer Vielzahl von Funkeinheiten, die mit einer Nebenstellenanlage gekoppelt sind. Die Nebenstellenanlage ist wiederum mit dem öffentlichen Telefonnetz über eine Amtsleitung verbunden. Sofern sich ein Teilnehmer im Versorgungsbereich der Funkeinheiten bewegt, kann er sich in das öffentliche Telefonnetz einwählen. Der Versorgungsbereich für den Teilnehmer ist hier jedoch nicht flächendeckend möglich, da ein Roaming von Funknetzzelle zu Funknetzzelle, wie bei einem öffentlichen Mobilfunknetz beispielsweise nach dem GSM- oder UMTS-Standard, nicht vorgesehen ist.

Die technische Spezifikation 3GPP TS Version 6.0.0 vom 7.1.2005 beschreibt die Zwischenzellübergabe für eine aktive Verbindung. Als nachteilig hat sich die Notwendigkeit häufiger Zwischenzellübergaben entlang vorgegebener Verkehrsstrecken, wie Bahnlinien und Autobahnen erwiesen.

### Offenbarung der Erfindung

Aufgabe der Erfindung ist es daher, eine Funkzelle für ein Mobilfunknetz zu schaffen, die die Nachteile des Standes der Technik verbessert und unabhängig von den geographischen Gegebenheiten über eine größere Ausdehnung verfügt.

Erfindungsgemäß wird die Aufgabe dadurch gelöst, dass bei einer Funknetzzelle eines digitalen, zellularen Mobilfunknetzes der eingangs genannten Art, wenigstens ein digitaler Funksignalverstärker (Repeater) im geographischen Versorgungsbereich der Basisstation (BTS) zur Ausdehnung der Funknetzzelle vorgesehen ist.

Weiterhin wird die Aufgabe durch ein Mobilfunknetz der eingangs genannten Art gelöst, mit wenigstens einer Funknetzzelle, welche einen Funksignalverstärker (Repeater) zur Ausdehnung des Versorgungsbereichs aufweist.

Die Erfindung beruht auf dem Prinzip, nicht zusätzliche Basisstationen zur Versorgung heranzuziehen, sondern die kostengünstigeren digitalen Funksignalverstärker (Repeater) zu verwenden. Damit wird erreicht, dass eine Funknetzzelle grundsätzlich auf eine beliebige Größe ausgedehnt werden kann. Die Ausdehnung der Funknetzzelle ist nun nicht mehr durch die geographischen Gegebenheiten beschränkt. Soweit eine Basisstation die Anzahl ein- und ausgehender Verbindung verarbeiten kann, ist die Ausdehnung einer Funknetzzelle eines Mobilfunknetzes weitestgehend in Form und Größe nicht mehr beschränkt. Dies hat den Vorteil, dass die Basisstationen nunmehr voll ausgelastet werden können. Der Mobilfunknetzbetreiber muss nun auch keine zusätzlichen Rechnerkapazitäten für das Roaming zur Verfügung stellen. Die Notwendigkeit häufiger Zwischenzellübergaben entfällt bei der erfindungsgemäßen Funknetzzelle.

Als vorteilhafte Ausgestaltung der Erfindung erweist sich, wenn die erfindungsgemäße Funknetzzelle eine stationäre Basisstation (BTS) und wenigstens ein Funksignalverstärker entlang einer Strecke angeordnet sind. Eine solche Strecke wird beispielsweise von einer Eisenbahnlinie oder einem Straßenverlauf gebildet. Auf diese Weise können auch weniger ausgelastete Bereiche des Mobilfunknetzes, wie sie z. B. durch Eisenbahnlinien gebildet werden, abgedeckt werden.

In einer weiteren bevorzugten Ausgestaltung der erfindungsgemäßen Funknetzzelle sind wenigstens zwei digitale Funksignalverstärker hintereinander in Reihe zur Ausdehnung der Funknetzzelle geschaltet. Durch die in Reihe geschalteten digitalen Funksignalverstärker kann die Ausdehnung einer Funknetzzelle sich im Extremfall über eine gesamte Strecke, wie beispielsweise eine Eisenbahnlinie zwischen zwei Orten, erstrecken.

Analog zu den in Reihe geschalteten Digitalen Funksignalverstärkern besteht in einer vorteilhaften Ausbildung der Erfindung die Möglichkeit wenigstens zwei digitale Funksignalverstärker parallel zur Ausdehnung der Funknetzzelle zu schalten. Damit müssen die Mobilfunkendgeräte nicht notwendigerweise alle über einen beziehungsweise in Reihe geschalteter Funksignalverstärker Verbindung zur Basisstation aufnehmen. Die Kommunikationsverbindung zwischen Mobilfunkendgerät und Basisstation kann vorteilhafter Weise auch über parallel angeordnete Funksignalverstärker erfolgen.

Durch die Verwendung von digitalen Funksignalverstärkern ist es nunmehr grundsätzlich möglich, dass die Funknetzzelle aus mehreren nicht zusammenhängenden Bereichen besteht. Eine bevorzugte Ausgestaltung der Erfindung sieht daher vor, dass die Funknetzzelle zusammenhängend ausgebildet ist. Dadurch kann ein Mobilfunkteilnehmer mit seinem Mobilfunkendgerät sich innerhalb der ausgedehnten Funknetzzelle ohne Verbindungsunterbrechung bewegen.

Analog zu der einzeln beanspruchten Funknetzzelle erweist sich als besondere Ausgestaltung des erfindungsgemäßen Mobilfunknetzes, dass wenigstens zwei Funksignalverstärker zur Ausdehnung einer Funknetzzelle in Reihe und/oder parallel geschaltet sind.

Vorzugsweise ist in einem erfindungsgemäßen Mobilfunknetz die Funknetzzelle mit dem Funksignalverstärker (Repeater) zusammenhängend ausgebildet. Durch diese Maßnahme kann ein Mobilfunkteilnehmer sich mit seinem Mobilfunkendgerät innerhalb der durch Funksignalverstärker ausgedehnten Funknetzzellen ohne Verbindungsunterbrechung bewegen.

Weitere Vorteile der Erfindung ergeben sich aus dem Gegenstand der Unteransprüche, sowie der Zeichnung mit der dazugehörigen Beschreibung.

### Kurze Beschreibung der Zeichnung

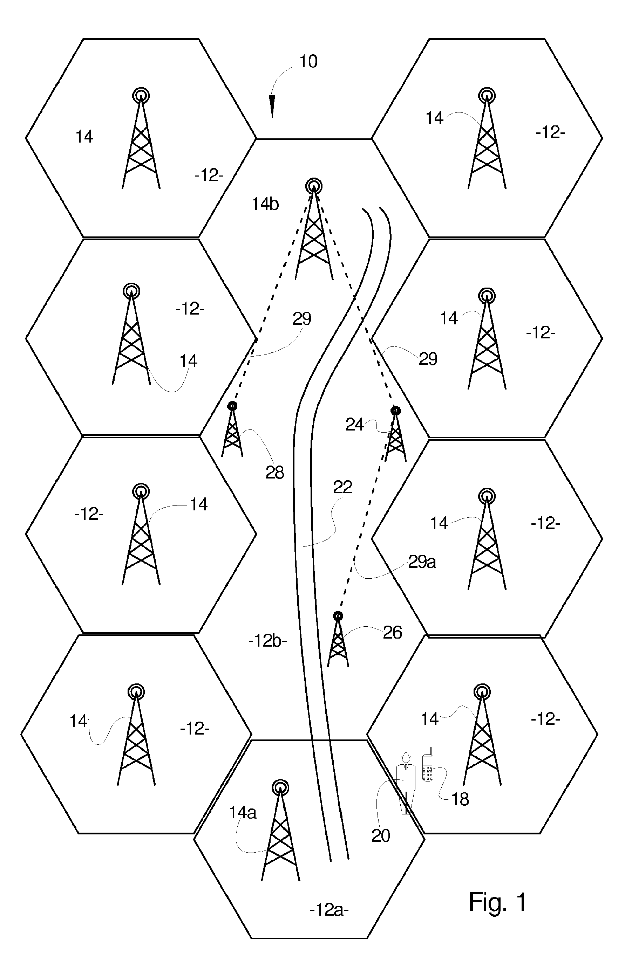

Fig. 1 zeigt in einer schematischen Prinzipskizze ein Mobilfunknetz mit einer durch Funksignalverstärker ausgedehnten Funknetzzelle.

### Bevorzugtes Ausführungsbeispiel

In Fig. 1 wird in einer schematischen Prinzipskizze ein erfindungsgemäßes Mobilfunknetz 10 dargestellt. Das Mobilfunknetz 10 besteht aus zahlreichen Funknetzzellen 12, die schematisch als Sechsecke dargestellt sind. Jede Funknetzzelle 12, 12a, 12b enthält mindestens eine Basisstation 14, die hier andeutungsweise als Funkmast 16 dargestellt ist. In der Realität sind die Funknetzzellen 12 unterschiedlich groß, da die Größe teilweise von geographischen oder sonstigen lokalen Gegebenheiten, wie Häusern, abhängig ist. Die Funknetzzelle 12 wird über den Abdeckungsbereich einer Basisstation 14 definiert. In diesem Bereich kann ein Mobilfunkteilnehmer 20 mit seinem Mobilfunkendgerät 18 eine Funkverbindung mit der Basisstation 14 aufnehmen.

Die Basisstationen 14 werden über nicht dargestellte Basisstationen-Controller (BSC) koordiniert. Die Verbindungen von Mobilfunkendgeräten 18 laufen schließlich in einer Vermittlungsstelle (MSC) zusammen, wo die Verbindung zu einem Kommunikationspartner aus einem Mobilfunknetz 10 oder einem Festnetz hergestellt wird.

Ein Mobilfunkteilnehmer 20 kann sich mit seinem Mobilfunkendgerät 18 beispielsweise von Funknetzzelle 12 zu Funknetzzelle 12a bewegen, ohne dass eine bestehende Verbindung unterbrochen wird. Dieser Vorgang wird als Roaming bezeichnet. Dabei werden die Daten und ggf. die Verbindung eines Mobilfunkteilnehmers 20 von der einen Basisstation 14 der Funknetzzelle 12 zur anderen Basisstation 14a der Funknetzzelle 12a übergeben.

Im vorliegenden Ausführungsbeispiel führt eine Straße 22 durch den Abdeckungsbereich des Mobilfunknetzes 10. Der Abdeckungsbereich des Mobilfunknetzes 10 sei durch die Summe aller Funknetzzellen 12, 12a, 12b definiert. Entlang der Straße 22 sind Funksignalverstärker 24, 26, 28 aufgestellt. Die Funksignalverstärker 24, 28 verstärken unmittelbar das Funksignal 29 der Basisstation 14b. Funksignalverstärker 24, 26, 28 werden in der Fachterminologie auch als "Repeater" bezeichnet. Im Fall des Funksignalverstärkers 26 wird das Funksignal 29a des Funksignalverstärkers 24 verstärkt, welches wiederum dem Funksignal der Basisstation 14b entspricht. Die Funksignalverstärker 24 und 26 sind somit hintereinander in Reihe geschaltet, während der Funksignalverstärker 28 parallel zu diesen beiden digitalen Funksignalverstärkern 24 und 26 angeordnet ist.

Durch die Verwendung von digitalen Funksignalverstärkern 24, 26, 28 kann die Funknetzzelle 12b praktisch eine beliebige Ausdehnung erhalten. Durch die Anordnung der Funksignalverstärker 24, 26, 28 in diesem Beispiel entlang der Straße 22, kann die Funknetzzelle 12b sich praktisch auf die gesamte Länge der Straße 22 erstrecken. Ein Roaming und eine damit verbundene Verwaltung des Roaming sind in diesem Bereich der ausgedehnten Funknetzzelle 12b nicht erforderlich. Dadurch werden erhebliche Rechnerkapazitäten im Mobilfunknetz 10 eingespart.

## Patentansprüche

1. Funknetzzelle (12) eines digitalen, zellularen Mobilfunknetzes (10), insbesondere nach dem GSM oder UMTS-Standard, welche durch eine stationäre Basisstation (14) versorgt wird, wobei die Größe der Funknetzzelle (12) durch die Reichweite des geographischen Versorgungsbereiches der Basisstation (14) bestimmt wird, **dadurch gekennzeichnet, dass** wenigstens ein digitaler Funksignalverstärker (24, 26, 28) im geographischen Versorgungsbereich der Basisstation (14b) zur Ausdehnung der Funknetzzelle (12b) vorgesehen ist.

2. Funknetzzelle (12) eines Mobilfunknetzes (10) nach Anspruch 1, **dadurch gekennzeichnet, dass** die stationäre Basisstation (14) und wenigstens ein Funksignalverstärker (24, 26, 28) entlang einer Strecke (22), insbesondere wie sie von Bahngleisen oder einem Straßenverlauf gebildet wird, angeordnet sind.

3. Funknetzzelle (12) eines Mobilfunknetzes (10) nach einem der Ansprüche 1 oder 2, **dadurch gekennzeichnet, dass** wenigstens zwei Funksignalverstärker (24, 26) hintereinander in Reihe zur Ausdehnung der Funknetzzelle (12b) geschaltet sind.

4. Funknetzzelle (12) eines Mobilfunknetzes (10) nach einem der Ansprüche 1 bis 3, **dadurch gekennzeichnet, dass** wenigstens zwei Funksignalverstärker (24, 28) parallel zur Ausdehnung der Funknetzzelle (12b) geschaltet sind.

5. Funknetzzelle (12) eines Mobilfunknetzes (10) nach einem der Ansprüche 1 bis 4, **dadurch gekennzeichnet, dass** die Funknetzzelle (12b) zusammenhängend ausgebildet ist.

6. Mobilfunknetz (10), dessen Ausdehnung durch die Anordnung von Funknetzzellen (12) zum Roaming für Mobilfunkendgeräte (18) festgelegt wird, wobei eine Funknetzzelle (12) durch die Reichweite des geographischen Versorgungsbereichs einer Basisstation bestimmt wird, **dadurch gekennzeichnet, dass** wenigstens eine Funknetzzelle (12b) einen digitalen Funksignalverstärker (24, 26, 28) zur Ausdehnung des Versorgungsbereichs aufweist.

7. Mobilfunknetz (10), dessen Ausdehnung durch die Anordnung von Funknetzzellen (12) zum Roaming für Mobilfunkendgeräte (18) festgelegt wird, nach Anspruch 6, **dadurch gekennzeichnet, dass** wenigstens zwei Funksignalverstärker (24, 26) zur Ausdehnung einer Funknetzzelle (12b) in Reihe geschaltet sind.

8. Mobilfunknetz (10), dessen Ausdehnung durch die Anordnung von Funknetzzellen (12) zum Roaming für Mobilfunkendgeräte (18) festgelegt wird, nach einem der Ansprüche 6 oder 7, **dadurch gekennzeichnet, dass** wenigstens zwei Funksignalverstärker (24, 28) zur Ausdehnung einer Funknetzzelle (12b) parallel geschaltet sind.

9. Mobilfunknetz (10), dessen Ausdehnung durch die Anordnung von Funknetzzellen (12) zum Roaming für Mobilfunkendgeräte (18) festgelegt wird, nach einem der Ansprüche 6 oder 8, **dadurch gekennzeichnet, dass** die Funknetzzelle (12b) mit dem Funksignalverstärker (24, 26, 28) zusammenhängend ausgebildet ist.
